# EUROPÄISCHE PATENTANMELDUNG

(11) **EP 1 905 632 A1**
(43) Veröffentlichungstag der Anmeldung: **02.04.2008**
(21) Anmeldenummer: 06425811.4
(22) Anmeldetag: 01.12.2006
(51) Int. Cl.: B60J 7/10

(54) **Abnehmbares durchsichtiges Hardtop-Verdeck für Cabriolet-Fahrzeuge**

(30) Priorität: 26.09.2006 IT
(71) Anmelder: Zanier, Maurizio, 03014 Fiuggi (IT); Schiano di Tunnariello, Silvia, 00036 Palestrina (IT)
(72) Erfinder: Zanier, Maurizio, 03014 Fiuggi (IT); Schiano di Tunnariello, Silvia, 00036 Palestrina (IT)

(57) **Zusammenfassung**

Ein durchsichtig Hardtop-Verdeck für Cabriolet-Fahrzeuge (fig.2) weist folgende Merkmale auf:
Ist total dursichtig dank der Hergestellung aus Kunststoff, wird an das Fahrzeug mit Verschlusselement verriegelt, und ist dadurch abnehmbar.
Diese Art von Hardtop, im Gegenteil zu den bereits vorhandenen Versionen, wird die Vorzüge eines Cabriolet hervorheben: freie Sicht, Gefühl von Freiheit und dies zu jedes Moment und jeder Jahreszeit!

## Beschreibung

Die Erfindung betrifft ein Hardtop-Verdeck, total hergestelt aus durchsichtiges Kunststoffe, abnehmbar, zur Installation auf alle Cabriolet-Fahrzeuge.

### Stand der Technik:

Momentan werden bei Cabrio-Fahrzeuge Hardtops gebaut, die abnehmbar sind aber nicht total sichtdurchlässig.

Die bisherige Art von Hardtop ist limitiert in seiner Konzeption, weil es aus Materialien hergestellt wird, die dem Cabriolet die ursprüngliche Idee rauben, nämlich das Gefühl von Freiheit. Es gibt auch auf dem Markt bereits Fahrzeuge, mit abnehmbare dursichtige Dachteile, z.B. in der Art "Targa", jedoch bringt diese Lösung nur eine Teil-Sichtfreiheit des Dachs.

### Aufgabenstellung:

Es ist daher Aufgabe der vorligenden Erfindung, ein Durchsichtiges Hardtop-Verdeck für Cabriolet-Fahrzeuge zu schaffen, bei welchem die Gesamte-Hauptstruktur aus technische-Kunststoffe, z.B. Polykarbonat, besteht, was total durchsichtig ist.

Die Idee dieses Hardtops ist es, die Schöne an einem Cabrios hervorzuheben: freie Sicht und Freiheits-Gefühl bei jedem Zeit, auch bei schlechten Wetterverhältnisse.

Erfindungsgemäss wird diese Aufgabe durch ein spezielles Herstellungverfahren (z.B. warmverformung) von Kunstoff Platte gelöst.

Der so hergestellte Hardtop wird dann als Zubehör-Hardtop angeboten und an das Kraftfahrzeug angebracht, wenn das Original-Verdeck sich in der geöffneten Stellung befindet.

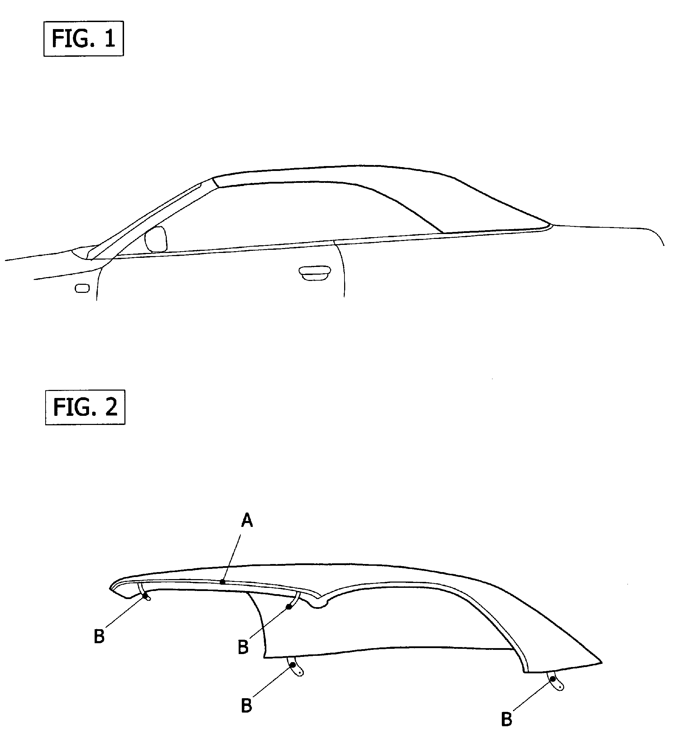

Erfindungsgemäss wird diese Aufgabe durch die mechanischen Verschlüsse fig 2 (b), die eine schnelle Verriegelung ermöglichen.

Spezifische Behandlungen und Technische Eigenschaften des Herstellungs-Materials erlauben es, dass sich der Innenraum nicht übermässig erwärmt; die Basis-Färbung kann personalisiert werden und die Disketion von aussen ist somit sichergestellt.

Ausserdem ermöglichen durchsichtige Dichtelemente, die über den gesamten Rand des Hardtops verläufen fig. 2 (a), dass der Innenraum wasserdicht und akustisch undurchdringlich ist.

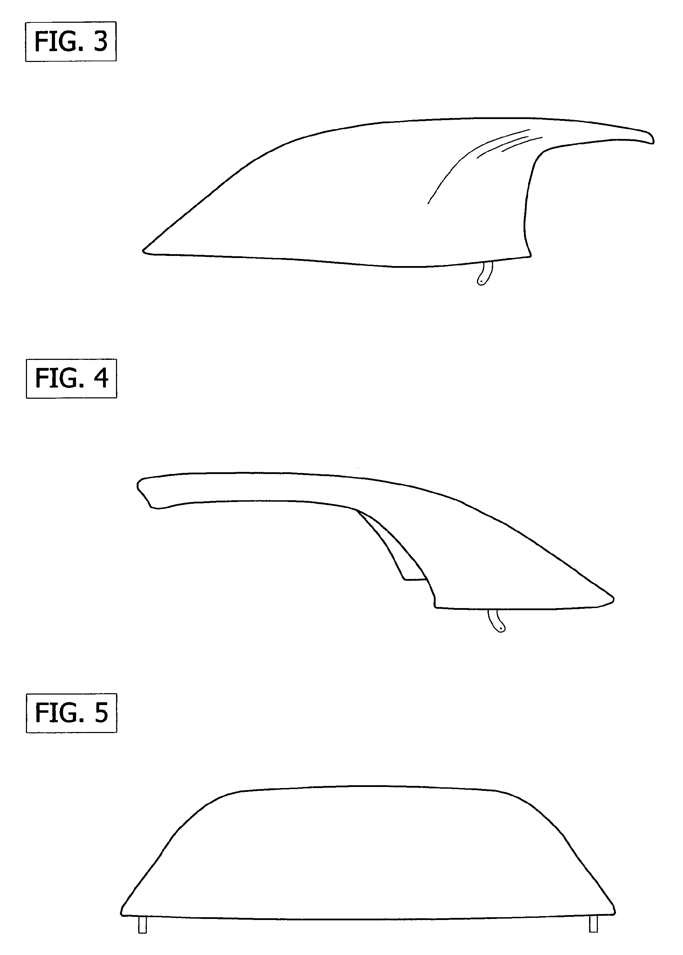

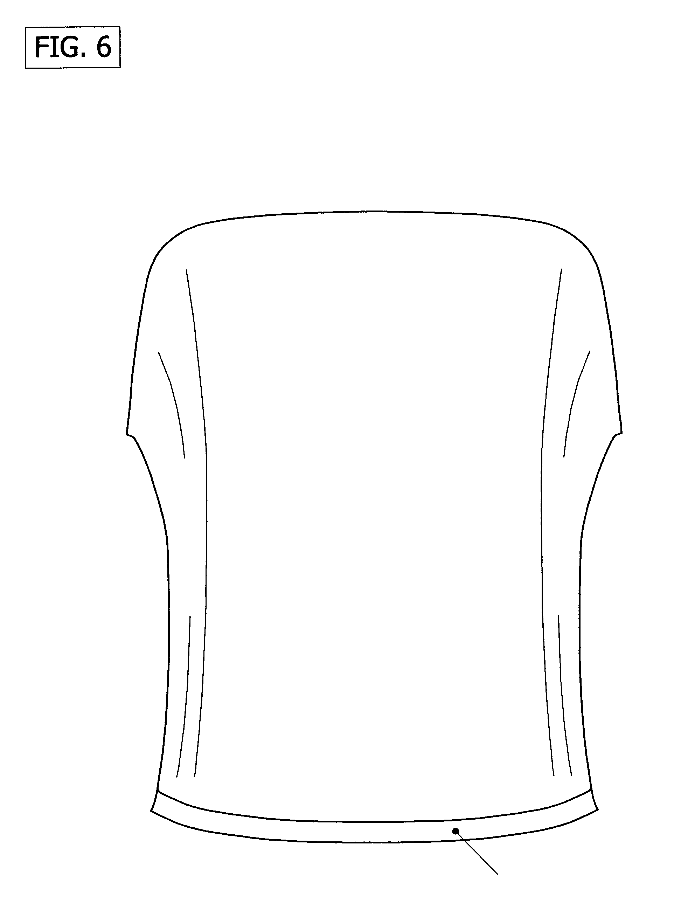

Die beigefügten Zeichnungen zeigen ein Beispiel fig.1 und die Projektionen: fig. 1, fig.3, fig. 4 (seitlich), fig.5 (von hinten), fig.6 (von oben).

## Patentansprüche

1. Ein durchsichtig Hardtop-Verdeck für Cabriolet-Fahrzeuge, welches folgende Merkmale aufweist:
Ist total Dursichtig dank der Hergestellung aus Kunststoff, wird an das Fahrzeug mit Verschlusselement verriegelt **dadurch** ist abnehmbar.

2. Dursichtiges Hardtop-Verdeck nach Anspruch 1, **dadurch gekennzeichnet, dass** das Hardtop, total durchsichtig ist.

3. Dursichtiges Hardtop-Verdeck nach Anspruch 1, **dadurch gekennzeichnet, dass** das Hardtop, in verschiedenen Farbvariationen hergestell wird.

4. Dursichtiges Hardtop-Verdeck nach Anspruch 1, **dadurch gekennzeichnet, dass** das Hardtop abnehmbar ist.

5. Dursichtiges Hardtop-Verdeck nach Anspruch 1, **dadurch** gekenneichnet, dass das Hardtop selbsttragend ist.

6. Dursichtiges Hardtop-Verdeck nach Anspruch 1, **dadurch gekennzeichnet, dass** das Hardtop über den gesamten Rand durchsichtige Dichtelemente hat.

7. Dursichtiges Hardtop-Verdeck nach Anspruch von 1 bis 6.
